# EUROPEAN PATENT APPLICATION

(11) **EP 2 811 175 A1**
(43) Date of publication of application: **10.12.2014**
(21) Application number: 14167695.7
(22) Date of filing: 09.05.2014
(51) Int. Cl.: F16B 2/18, B64D 37/00

(54) **Adjustment and locking mechanisms**

(30) Priority: 10.05.2013 US 201313891558
(71) Applicant: Hamilton Sundstrand Corporation, Windsor Locks, CT 06096-1010 (US)
(72) Inventor: Paradise, Bruce, Avon, CT 06001 (US)
(74) Representative: Leckey, David Herbert

(57) **Abstract**

A locking mechanism (16) includes a connection portion (36), a first arm (38), a second arm (40), and a fastener (32). The first arm (38) extends from the connection portion (36) and defines a first aperture (44) and a second aperture (46). The second arm (40) extends from the connection portion (36) and defines a third aperture (48). The first arm (38) is spaced from the second arm (40) by a notch (42). The fastener (32) is adapted to extend through the first aperture (44) and across the notch (42) to abut the second arm (40).

## Description

### BACKGROUND

This disclosure relates fluid delivery systems, and more particularly, to an assembly to facilitate the locking and adjustment of valve components for metering and control of fluid delivery systems.

Typically, fuel delivery systems for aircraft gas turbine engines use a fixed positive displacement pump, such as a vane or gear pump, to pressurize fuel for subsequent delivery to the engine. The fixed positive displacement pump provides a flow whose volume is a function of the speed at which the pump is rotating. The relation of the change in volumetric output for a change in speed is linear in nature.

The demand for fuel increases as the speed of the turbine increases, although when measured as a function of the percentage of pump output, demand for fuel is greatest at either low speeds (engine start) or at high speeds (take-off) and is lower during normal flight operation. During normal flight operation, the excess fuel output from the fixed positive displacement pump must be bypassed from the fuel control back to the input of the fixed positive displacement pump or to a fuel reservoir. Therefore, in order to provide the desired flow of fuel to the turbine and other components of the fuel system must be regulated through the use of valves including a metering valve.

Operation of valves is based upon incompressible flow theory which states that flow through a valve is a function of the area of the valve opening multiplied by the square root of the product of the pressure drop across the valve multiplied by the specific gravity of the fluid. A pressure regulating valve controls pressure drop across the metering valve and compensates for temperature variations in the fuel. As a result, the flow though the metering valve can be precisely controlled by varying the area of the opening of the metering valve window.

The flow out of the valves and/or pump(s) can be measured by a flow meter. In some cases, the metered flow is calculated using a linear variable differential transformer "LVDT". This allows for measurement of the area of the metering window. The pressure drop across the window is maintained at a known value by the pressure regulating valve. The metered flow rate is then compared to the output flow rate to determine the presence of excess flow.

To calibrate the fuel control system to the fuel system, the LVDT must be adjusted to set a precise output ratio that corresponds to the mechanical window of the valve so that the electrical system is synchronized to flow through the valve. Typically, the calibration process requires a portion of the valve to be disassembled and specially designed tools are used to adjust the position of the LVDT. In some instances, one tool is used to make the adjustment to the LVDT and a second tool is used to lock down the LVDT. Unfortunately, locking down the LVDT tends to alter the just completed repositioning of the LVDT. Thus, the process of adjustment and locking down the LVDT must be repeated. The process is a repetitious trial and error process until a desired LVDT positioning is finally achieved. Because of its repetitious nature, the process of adjustment and locking down of the LVDT can be tedious and time consuming.

### SUMMARY

A locking mechanism includes a connection portion, a first arm, a second arm, and a fastener. The first arm extends from the connection portion and defines a first aperture and a second aperture. The second arm extends from the connection portion and defines a third aperture. The first arm is spaced from the second arm by a notch. The fastener is adapted to extend through the first aperture and across the notch to abut the second arm.

A valve includes a housing, a linear variable differential transformer, and a locking mechanism. The housing includes one or more ports for receiving a fluid. The linear variable differential transformer extends within the housing and has an adjustment mechanism with a rod. The locking mechanism is adapted to receive the rod and is configured as a hinge to apply a locking torsion force that is distributed over a plurality of threads of the rod.

A fuel system for an engine includes a valve that has a linear variable differential transformer with an adjustment mechanism and a locking mechanism for retaining the adjustment mechanism. The adjustment mechanism includes a connection portion, a first arm, a second arm, and a fastener. The first arm extends from the connection portion and defines a first aperture and a second aperture. The second arm extends from the connection portion and defines a third aperture. The first arm is spaced from the second arm by a notch, and the second aperture and the third aperture receive the adjustment mechanism. The fastener is adapted to extend through the first aperture and across the notch to abut the second arm.

### BRIEF DESCRIPTION OF THE DRAWINGS

FIG. 1 is cross-section of one embodiment of a valve containing an LVDT adjustment mechanism and a locking mechanism.
FIG. 2 is an enlarged cross-sectional view of the locking mechanism and the LVDT adjustment mechanism of FIG. 1.
FIG. 2A is an end view of the locking mechanism and LVDT adjustment mechanism of FIG. 2.

### DETAILED DESCRIPTION

The application discloses embodiments of a locking mechanism and an adjustment mechanism. Although described in reference to fluid systems such as fuel delivery systems for gas turbine engines, the disclosure is also applicable to other technologies, particularly technologies where precise adjustment and control of components is desired such as in the laser and optics industries. The locking mechanism is adapted to receive the adjustment mechanism in a threaded engagement and allows for movement of the adjustment mechanism relative thereto for calibration purposes. The locking mechanism includes a collar that is adapted as a hinge to apply a locking torsion force into the adjustment mechanism when a fastener is threaded into abutment with a portion the locking collar. The locking torsion force is distributed over a plurality of threads of the adjustment mechanism, which allows for a finer thread to be used. The finer thread allows for more precise adjustment of the adjustment mechanism and easier calibration of the LVDT. Additionally, due to the design of the collar, the application of the locking torsion force by the locking mechanism has minimal to no impact on the positioning of the adjustment mechanism. To make adjustments to calibrate the LVDT, personnel simply releases the locking torsion force by releasing the fastener from abutment with the collar, adjusts the adjustment mechanism to a desired position, and then tightens the fastener back into adjustment with the collar to generate the locking torsion force. Thus, personnel does not have to undergo a repetitious trial and error process to calibrate the LVDT. Additionally, the locking mechanism and adjustment mechanism allow a standard Allen wrench to be used, eliminating the need for special tooling from the calibration process.

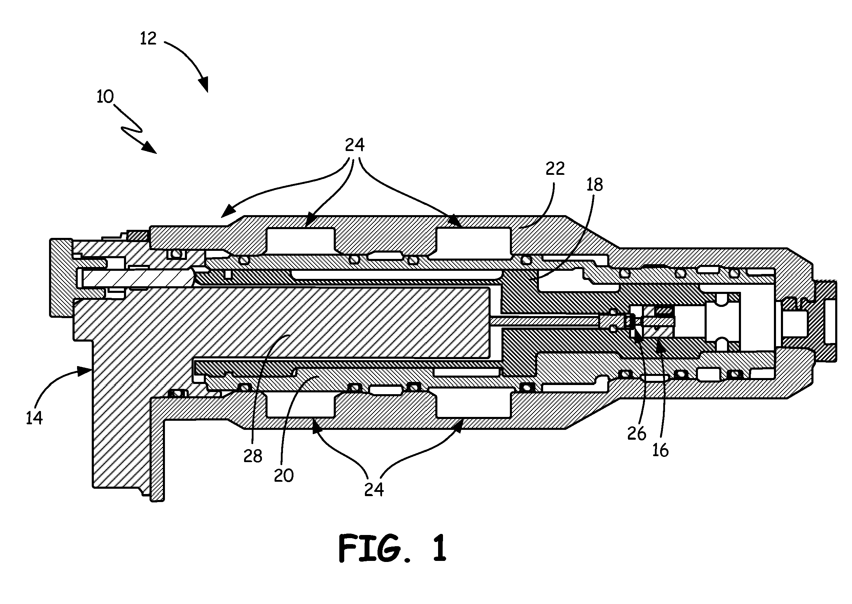

FIG. 1 illustrates a cross-section of a valve 10 for a fuel system 12. The valve 10 includes an LVDT 14, a locking mechanism 16, a spool 18, a sleeve 20, and a housing 22. The housing 22 includes ports 24. The LVDT 14 includes an adjustment mechanism 26. In the exemplary embodiment of FIG. 1, the valve 10 comprises a metering valve. However, the locking mechanism 16 and the adjustment mechanism 26 described herein are equally applicable to other types of components and to other technologies where control and monitoring is desired. For example, the adjustment mechanism 26 and locking mechanism 16 can be applied to hydraulic actuators or other devices that require precise LVDT adjustment either in wet or dry calibration systems.

In FIG. 1, the LVDT 14 and the locking mechanism 16 extend within an interior of the hollow spool 18. Additionally, the locking mechanism 16 is mounted to the spool 18. The spool 18 is disposed within the hollow sleeve 20. The sleeve 20 is disposed between the housing 22 and the spool 18. The housing 22 defines the ports 24, allow fluid from the fuel system 12 to enter into and exit from the valve 10. The adjustment mechanism 26 extends from the remainder of the LVDT 14 and connects to the locking mechanism 16 in a manner that will be discussed subsequently.

As shown in FIG. 1, the locking mechanism 16 is connected to the spool 18 by a press fit or other connection. The locking mechanism 16 has threads and receives a threaded rod portion of the adjustment mechanism 26. The locking mechanism 16 is adapted to apply a locking torque to the adjustment mechanism 26 in order to couple the adjustment mechanism 26 together with the locking mechanism 16 in a threaded engagement. Additionally, the locking mechanism 16 is configured such that the locking torque can be released to allow for movement of the adjustment mechanism 26 relative to the locking mechanism 16 for calibration of the LVDT 14.

The valve 10 comprises one component of the fluid system 12. In the embodiment of FIG. 1, the valve 10 meters flow of fluid to other components of the fluid system 12. Further discussion of fluid systems and valves for metering fuel to gas turbine engines is discussed in United States Patent Numbers 5,448,882, 6,321,527, 6,401,446, and 6,682,016.

In the embodiment of FIG. 1, the LVDT 14 includes a stationary portion 28 extending within the spool 18. The stationary portion 28 is fixedly mounted to the sleeve 20 and/or the housing 22, and receives the moveable adjustment mechanism 26 therein. When the locking mechanism 16 is in a locked position, the adjustment mechanism 26 is retained by the locking mechanism 16 and is therefore moveable with movement of the spool 18.

The movement of the spool 18 relative to the sleeve 20 and the housing 22 meters fluid system 12 flow through the valve 10. The movement of the spool 18 is controlled by other components such as a pressure regulating valve (not shown), which controls pressure drop across the valve 10 and compensates for temperature variations in the fuel. Movement of the adjustment mechanism 26 relative to the stationary portion 28 of the LVDT 14 allows the electrical system to be synchronized to flow through the valve 10.

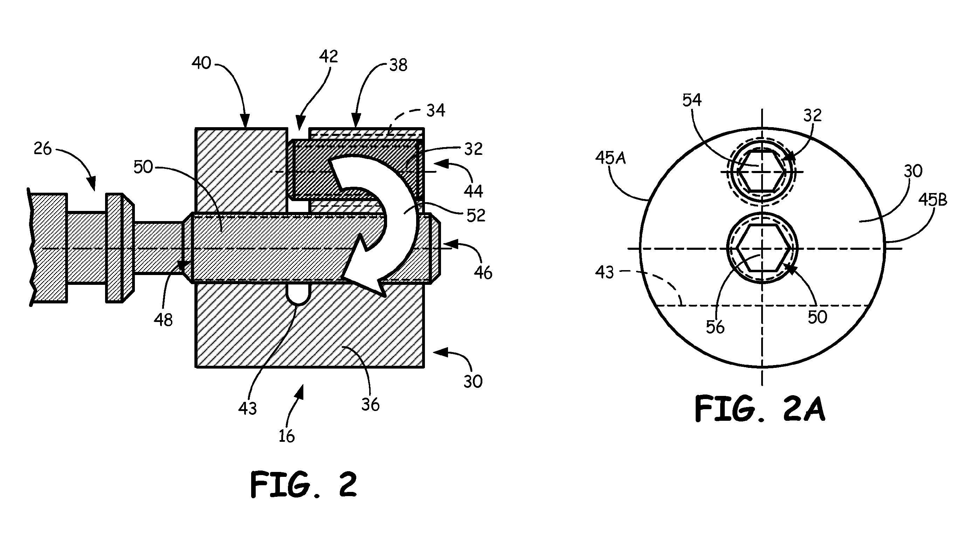

FIG. 2 shows the locking mechanism 16 and a portion of the adjustment mechanism 26. In FIG. 2, components of the valve 10 (FIG. 1), such as the spool 18, have been removed. The locking mechanism 16 includes a collar 30, a fastener 32, and a helicoil 34. The collar 30 includes a connection portion 36, a first arm 38, and a second arm 40. The first arm 38 and the second arm 40 are spaced from on another by a notch 42. The first arm 38 includes a first aperture 44 and a second aperture 46. The second arm 40 includes a third aperture 48.

FIG. 2 shows the collar 30, fastener 32, helicoil 34, and a threaded rod 50 portion of the adjustment mechanism 26 assembled together. The connection portion 36 forms a side surface of the collar 30 and extends between the first arm 38 and the second arm 40. The first arm 38 and the second arm 40 are spaced from one another by the notch 42, which extends to terminate along a surface 43 of the connection portion 36. The notch 42 comprises a slot that extends through collar 30 from a second side surface 45A (FIG. 2A) to a second side surface 45B (FIG. 2A). The notch 42 additionally extends around the rod 50 and extends to the connection portion 36 along the surface 43. Thus, the notch 42 is defined by the connection portion 36 as well as the first arm 38 and the second arm 40 and the connection portion 36 is the only component that connects the first arm 38 to the second arm 40.

The first arm 38 extends from the connection portion 36 and receives the fastener 32 and the helicoil 34 therein, in particular in the first aperture 44 that extends through first arm 38. In FIG. 3, the wall that defines the first aperture 44 has a plurality of threads. The first aperture 44 is adapted to receive and engage the helicoil 34, which includes a mating thread. The helicoil 34 is hollow and includes a thread on an internal portion. The hollow helicoil 34 is adapted to receive and engage with the fastener 32, which includes a mating external thread. In the locked position shown in FIG. 2, the fastener 32 extends through the first aperture 44 and across the notch 42 to abut the second arm 40.

The second aperture 46 extends through first arm 38 adjacent the first aperture 44. In the embodiment shown in FIG. 2, the second aperture 46 is positioned along a centerline axis of the collar 30. The third aperture 48 extends through the second arm 40 and generally aligns with the second aperture 46 along the centerline axis of the collar 30. The second aperture 46 and the third aperture 48 are adapted to receive the threaded rod 50. The collar 30 along the second aperture 46 and third aperture 48 includes threads adapted to mate with the thread of the rod 50. In one embodiment, the rod 50 is provided with a 0.190-100 thread.

As shown in FIG. 2, the fastener 32 is in the locked position with the fastener 32 abutting the second arm 40. This arrangement creates a locking torsion force 52 that is applied through the first arm 38 to the rod 50 of the adjustment mechanism 26. In particular, the locking torsion force 52 causes engagement of the mating threads on rod 50 with the threads along the collar 30 in the second aperture 46 (i.e., the locking torsion force 52 jams the threads of the collar 30 into interlocking engagement with the threads on the rod 50). The locking torsion force 52 keeps the adjustment mechanism 26 engaged with the locking mechanism 16 and allows the adjustment mechanism 26 to translate with the spool 16 (FIG. 1). The locking torsion force 52 is distributed over a plurality of threads of the rod 50. The distributed force allows for a finer thread to be used, which results in more precise adjustment of the adjustment mechanism 26 and easier calibration of the LVDT 14 (FIG. 1). Additionally, due to the design of the collar 30, the application of the locking torsion force 52 by the locking mechanism 16 has minimal to no impact on the positioning of the adjustment mechanism 26. Thus, personnel do not have to undergo a repetitious trial and error process to calibrate the LVDT 14.

To adjust the position of the adjustment mechanism 26, the fastener 32 is backed out of abutment with the second arm 40. With the fastener 32 backed out of abutment, the rod 50 is then free to be moved by tooling relative to collar 30 to change the position of the adjustment mechanism 26 relative to the stationary portion 28 of the LVDT 14 (FIG. 1).

FIG. 2A shows an end view of the collar 30, the fastener 32, the first side surface 45A, the second side surface 45B and the rod 50. Surface 43 of connection portion 36 is illustrated in phantom and is shown extending through collar 30 from the first side surface 45A to the second side surface 45B. In the embodiment shown in FIG. 2A, fastener 32 comprises a set screw with a hexagonal head 54. Similarly, rod 50 is provided with a hexagonal head 56. This arrangement allows for standard Allen wrenches to be used to make adjustments and then lock down the assembly. Thus, any need for special tooling is eliminated from the calibration process.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A locking mechanism (16) comprising:
a connection portion (36);
a first arm (38) extending from the connection portion (36) and defining a first aperture (44) and a second aperture (46);
a second arm (40) extending from the connection portion (36) and defining a third aperture (48), wherein the first arm (38) is spaced from the second arm (40) by a notch (42); and
a fastener (32) adapted to extend through the first aperture (44) and across the notch (42) to abut the second arm (40).

2. The locking mechanism of claim 1, wherein the second aperture (46) and the third aperture (48) align and include threads.

3. The locking mechanism of claim 2, further comprising an adjustment mechanism (26), wherein the first and second apertures (44,46) are adapted to receive a rod (50) of the adjustment mechanism (26).

4. The locking mechanism of claim 3, wherein the rod (50) includes a 0.190-100 thread and a hexagonal head (56).

5. The locking mechanism of claim 3 or 4, wherein contact between the second arm (40) and the fastener (32) applies a locking torsion force that is distributed over a plurality of threads of the rod (50).

6. The locking mechanism of any preceding claim, further comprising a helicoil (34), wherein the helicoil (34) is adapted to be disposed in the first aperture (44) and receive the fastener (32).

7. The locking mechanism of any preceding claim, wherein the fastener (32) comprises a set screw with a hexagonal head (54).

8. A valve (10) comprising:
a housing (22) including one or more ports (24) for receiving a fluid;
a linear variable differential transformer (14) extending within the housing (22), wherein the linear variable differential transformer (24) has an adjustment mechanism (26) with a rod (50); and
a locking mechanism (16) adapted to receive the rod (50), the locking mechanism (16) being configured as a hinge to apply a locking torsion force (52) that is distributed over a plurality of threads of the rod (50).

9. The valve of claim 8, wherein the locking mechanism is a locking mechanism of any of claims 1 to 7.

10. The valve of claim 9, wherein the second aperture (46) and the third aperture (48) receive the rod (50).

11. The valve of claim 8, 9 or 10, wherein the valve comprises a metering valve.

12. A fuel system (12) for an engine, comprising:
a valve (10) having a linear variable differential transformer (14) with an adjustment mechanism (26) and a locking mechanism (16) for retaining the adjustment mechanism (26), the adjustment mechanism (26) comprising a mechanism as set forth in any of claims 1 to 7;
wherein the second aperture (46) and the third aperture (48) receive the adjustment mechanism (26).

13. The fuel delivery system of claim 12, wherein contact between the second arm (40) and the fastener (32) applies a locking torsion force that is distributed over a plurality of threads of the adjustment mechanism (26).

14. The fuel delivery system of claim 12 or 13, wherein the notch (42) extends around the adjustment mechanism (26).

15. The fuel delivery system of claim 12, 13 or 14, wherein the valve (10) comprises a metering valve.
